# EUROPEAN PATENT APPLICATION

(11) **EP 2 991 286 A1**
(43) Date of publication of application: **02.03.2016**
(21) Application number: 14788493.6
(22) Date of filing: 25.04.2014
(51) Int. Cl.: H04L 12/711, H04L 12/717, H04L 12/741

(54) **COMMUNICATION NODE, COMMUNICATION SYSTEM, PACKET PROCESSING METHOD AND PROGRAM**

(30) Priority: 26.04.2013 JP 2013093738
(71) Applicant: NEC Corporation, Tokyo 108-8001 (JP)
(72) Inventor: TORIGOE, Keisuke, Tokyo 108-8001 (JP); SUZUKI, Yoji, Tokyo 108-8001 (JP); TAKASHIMA, Masanori, Tokyo 108-8001 (JP)
(74) Representative: Reeve, Nicholas Edward
(86) International application number: PCT/JP2014/061694
(87) International publication number: WO 2014/175423

(57) **Abstract**

A communication node(s) in a centralized-control-type network is allowed to change an instruction(s) (control information) given by a control apparatus(es) without querying the control apparatus(es) every time or previously arranging an alternative flow entry(ies) for failure recovery in a flow table. The communication node includes: a packet processing unit which processes received packets by referring to a first table(s) that stores an entry(ies) defining match conditions against which the received packets are matched and a processing content(s) applied to packets that match the match conditions; and an autonomous operation unit which refers to a second table(s) in which an event(s) is associated with a change(s) applied to an entry(ies) stored in the first table(s) when occurrence of the event(s) is detected and which rewrites an entry(ies) in the first table(s) on the basis of an event(s) that has occurred.

## Description

### [Technical Field]

### (Reference to Related Application)

This application is based upon and claims the benefit of the priority of Japanese Patent Application No. 2013-093738 filed on April 26, 2013, the disclosure of which is incorporated herein in its entirety by reference thereto.

The present invention relates to a communication node, a communication system, a packet processing method, and a program. In particular, it relates to: a communication node that operates on the basis of control information set by a control apparatus(es); a communication system; a packet processing method; and a program.

### [Background]

NPLs 1 and 2 propose a technique referred to as OpenFlow that realizes a centralized-control-type network in which the control and data planes are separated from each other. OpenFlow recognizes communications as end-to-end flows and performs path control, failure recovery, load balancing, and optimization on a per-flow basis. An OpenFlow switch standardized in NPL 2 has a secure channel for communication with an OpenFlow controller and operates according to a flow table suitably added or rewritten by the OpenFlow controller. In the flow table, a set of the following three is defined for each flow: match conditions (Match Fields) against which packet headers are matched; flow statistical information (Counters); and an instruction(s) (Instructions) that defines a processing content(s) (see section "5.2 Flow Table" in NPL 2).

For example, when an OpenFlow switch receives a packet, the OpenFlow switch searches its flow table for an entry having match conditions (see "5.3 Matching" in NPL 2) that match header information of the received packet. As a result of the search, if the OpenFlow switch finds an entry that matches the received packet, the OpenFlow switch updates its flow statistical information (Counters) and processes the received packet on the basis of the processing content(s) (packet transmission from a specified port, flooding, dropping, etc.) written in the instruction field of the entry. If, as a result of the search, the OpenFlow switch does not find an entry that matches the received packet, the OpenFlow switch requests the OpenFlow controller to set an entry for processing the received packet, namely, transmits a control information transmission request (Packet-In message) to the OpenFlow controller via the corresponding secure channel. The OpenFlow switch receives a flow entry in which a processing content(s) is defined and updates its own flow table. In this way, the OpenFlow switch performs packet forwarding by using an entry stored in its flow table as control information.

PTL 1 discloses a communication apparatus (corresponding to an OpenFlow switch) that performs high-speed path switching when a failure or congestion occurs in a network using the above OpenFlow. More specifically, PTL 1 discloses that this communication apparatus includes: a processing storage unit (corresponding to the above flow table) that stores processing rules in which information for identifying received packets and processing performed on the received packets are associated with each other; an alternative processing storage unit (a table storing alternatives to entries in the above flow table) that stores processing rules including processing that is performed on the received packets and that is different from the processing stored in the processing storage unit; and a processing unit that processes the received packets in accordance with the processing rules obtained by searching the processing storage unit or the alternative processing storage unit on the basis of the information for identifying the received packets.

PTL 2 discloses an OpenFlow controller capable of reducing unnecessary flow setup processing (setting control information in switches). The OpenFlow controller achieves this by setting control information (a forwarding rule) after confirming establishment of connection between terminals.

PTL 3 discloses a configuration in which a plurality of flow tables are held in an individual OpenFlow switch. In this way, an individual OpenFlow switch is allowed to hold more entries.

### [Citation List]

### [Patent Literature]

PTL 1: Japanese Patent Kokai Publication No. JP2012-49674A
PTL 2: Japanese Patent Kokai Publication No. JP2012-195807A
PTL 3: International Publication No. 2012/032864

### [Non Patent Literature]

NPL 1: Nick McKeown, and seven others, "OpenFlow: Enabling Innovation in Campus Networks," [online], [searched on April 10, 2013], Internet <URL:http://www.openflow.org/documents/openflow-wp-latest.pdf>
NPL 2: "OpenFlow Switch Specification" Version 1.3.1 (Wire Protocol 0x04), [online], [searched on April 10, 2013], Internet <URL: https://www.opennetworking.org/images/stories/downloads/sdn-resourc es/onf-specifications/openflow/openflow-spec-v1.3.1.pdf>

### [Summary]

### [Technical Problem]

The following analysis has been given by the present inventors. As pointed out in paragraphs 0006 to 0008 in PTL 1, in a network in which the control and data planes are separated from each other as typified by the above OpenFlow, when a failure occurs, much time is required until communication is enabled again, which is counted as a problem. This is because a switch(es) controlled in the network needs to query a control apparatus (OpenFlow controller) controlling the control plane about the next operation or data forwarding destination. Particularly, if the network is expanded and the number of switches controlled by the control apparatus is increased, many queries are simultaneously transmitted to the control apparatus. As a result, the control plane is congested, which is counted as a problem.

According to PTL 1, an individual communication apparatus includes at least one flow table that stores a group of basic flow entries that corresponds to paths used during a normal operation and a group of alternative flow entries that corresponds to alternative paths used when failures occur. The communication apparatus realizes path switching by referring to the group of basic flow entries during a normal operation and to the group of alternative flow entries when a failure occurs (see paragraph 0062. PLT 1 also discloses a method of searching two flow entry groups in parallel and a method of determining the processing that needs to be performed by the corresponding switch).

However, PTL 1 is problematic in that an area for storing the group of alternative flow entries needs to be secured in a flow table. Particularly, if the flow table is configured by using a CAM (Content-Addressable Memory) or the like, a valuable area is occupied by the flow entries that are used only when a failure occurs.

In addition, in a network in which the control and data planes are separated from each other, it is desirable that instructions given to communication nodes such as switches be changed at various timing, for example, when malfunction of a port of a certain switch is detected, when communication with the control apparatus (controller) is disconnected, or when congestion occurs.

It is an object of the present invention to provide: a communication node(s) that is allowed to change an instruction(s) (control information) given by a control apparatus(es) when a predetermined event such as a failure occurs without querying the control apparatus(es) every time or previously arranging an alternative flow entry(ies) for failure recovery in a flow table as described above; a communication system; a packet processing method; and a program.

### [Solution to Problem]

According to a first aspect, there is provided a communication node, including: a packet processing unit which processes received packets by referring to a first table(s) that stores an entry(ies) defining match conditions against which the received packets are matched and a processing content(s) applied to packets that match the match conditions; and an autonomous operation unit which refers to a second table(s) in which an event(s) is associated with a change(s) applied to an entry(ies) stored in the first table(s) when occurrence of the event(s) is detected and which rewrites an entry(ies) in the first table(s) on the basis of an event(s) that has occurred.

According to a second aspect, there is provided a communication system including the above communication node(s) and a control apparatus(es) that sets an entry(ies) in the first table(s) and the second table(s) of the communication node(s).

According to a third aspect, there is provided a packet processing method, including steps of: causing a communication node, including a packet processing unit which processes received packets by referring to a first table(s) that stores an entry(ies) defining match conditions against which received packets are matched and a processing content(s) applied to packets that match the match conditions, to detect occurrence of a predetermined event(s); and causing the communication node to refer to a second table(s) in which an event(s) is associated with a change(s) applied to an entry(ies) stored in the first table(s) when occurrence of the event(s) is detected and to rewrite an entry(ies) in the first table(s) on the basis of an event(s) that has occurred. This method is associated with a certain machine(s), namely, with a communication node(s) that processes received packets by referring to the above first table(s).

According to a fourth aspect, there is provided a program, causing a computer, including a packet processing unit which processes received packets by referring to a first table(s) that stores an entry(ies) defining match conditions against which received packets are matched and a processing content(s) applied to packets that match the match conditions, to perform processing for: detecting occurrence of a predetermined event(s); and referring to a second table(s) in which an event(s) is associated with a change(s) applied to an entry(ies) stored in the first table(s) when occurrence of the event(s) is detected and rewriting an entry(ies) in the first table(s) on the basis of an event(s) that has occurred. The program may be recorded in a computer-readable (non-transitory) storage medium. Namely, the present invention can be embodied as a computer program product.

### [Advantageous Effects of Invention]

According to the present invention, a communication node(s) is allowed to change an instruction(s) (control information) given by a control apparatus(es) without querying the control apparatus(es) every time or previously arranging an alternative flow entry(ies) for failure recovery in a flow table.

### [Brief Description of Drawings]

Fig. 1 illustrates a configuration according to an exemplary embodiment of the present invention.
Fig. 2 illustrates a configuration of a communication system according to a first exemplary embodiment of the present invention.
Fig. 3 illustrates a configuration of an OpenFlow switch (OFS) according to the first exemplary embodiment of the present invention.
Fig. 4 illustrates an exemplary configuration of an event table held in the OpenFlow switch (OFS) according to the first exemplary embodiment of the present invention.
Fig. 5 illustrates operations of OpenFlow switches (OFSs) according to the first exemplary embodiment of the present invention.
Fig. 6 illustrates operations of the OpenFlow switches (OFSs) according to the first exemplary embodiment of the present invention.
Fig. 7 illustrates another exemplary configuration of the event table held in the OpenFlow switch (OFS) according to the first exemplary embodiment of the present invention.
Fig. 8 illustrates a configuration of a communication system according to a second exemplary embodiment of the present invention.
Fig. 9 illustrates an exemplary configuration of an event table held in an OpenFlow switch (OFS) according to the second exemplary embodiment of the present invention.
Fig. 10 illustrates operations of OpenFlow switches (OFSs) according to the first exemplary embodiment of the present invention.
Fig. 11 illustrates operations of the OpenFlow switches (OFSs) according to the second exemplary embodiment of the present invention.

### [Description of Embodiments]

First, an outline of an exemplary embodiment of the present invention will be described with reference to the drawings. In the following outline, various components are denoted by reference characters for the sake of convenience. Namely, the following reference characters are merely used as examples to facilitate understanding of the present invention, not to limit the present invention to the illustrated modes.

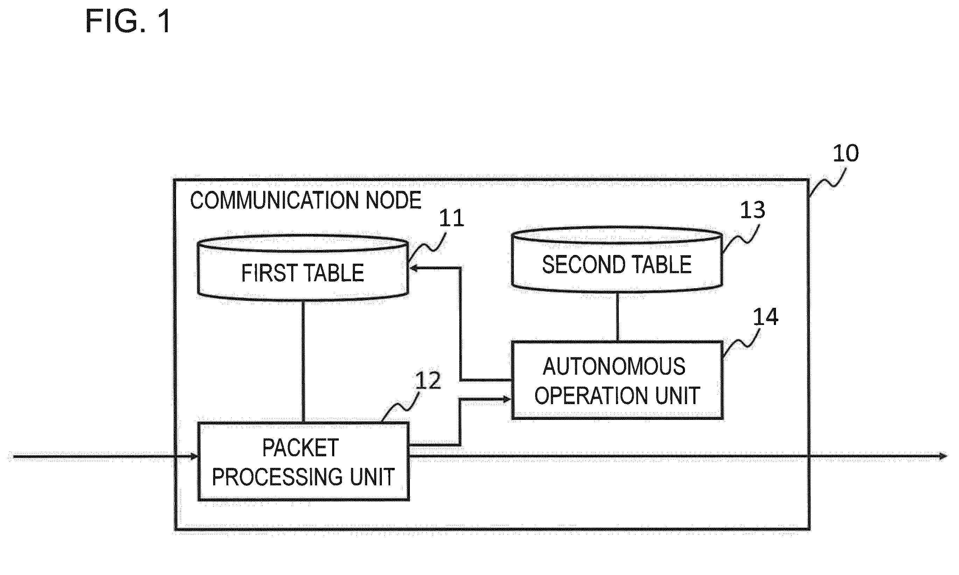

As illustrated in Fig. 1, an exemplary embodiment of the present invention can be realized by a communication node 10 including: a packet processing unit 12 which processes received packets by referring to a first table 11 that stores an entry(ies) defining match conditions against which received packets are matched and a processing content(s) applied to packets that match the match conditions; and an autonomous operation unit 14 which refers to a second table 13 and which rewrites an entry(ies) in the first table on the basis of an event(s) that has occurred.

More specifically, in the second table 13, an event(s) that can be detected by the communication node is associated with a change(s) applied to an entry(ies) stored in the first table 11 when occurrence of the event(s) is detected. The autonomous operation unit 14 rewrites an entry(ies) in the first table 11 on the basis of an event(s) that has occurred.

Through the above processing, the communication node 10 can change processing applied to received packets on the basis of an event(s) that has occurred, without querying a control apparatus.

### [First exemplary embodiment]

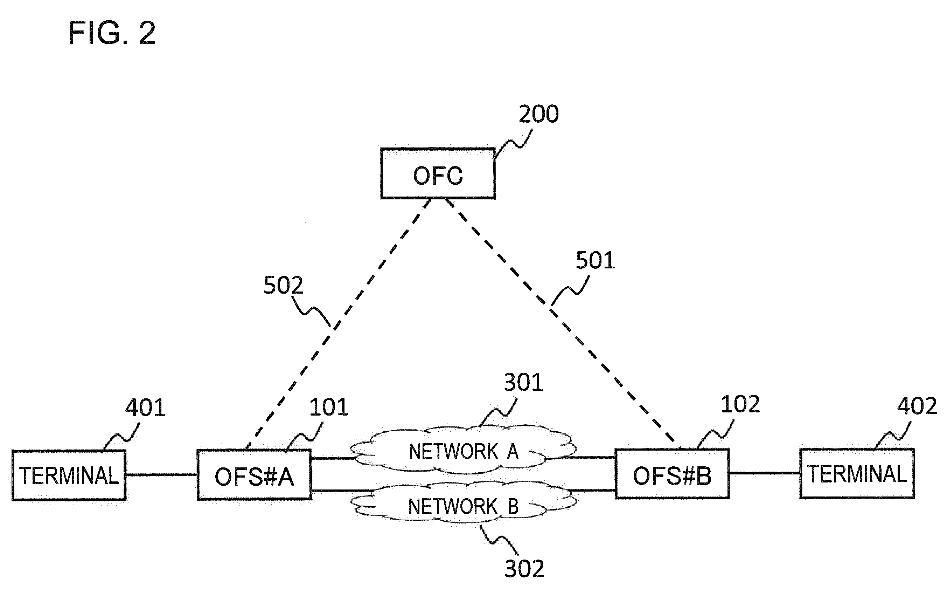

Next, a first exemplary embodiment of the present invention will be described in detail with reference to the drawings. Fig. 2 illustrates a configuration of a communication system according to the first exemplary embodiment of the present invention. As illustrated in Fig. 2, the communication system includes: OpenFlow switches (OFSs) 101 and 102 that are arranged at edges of two networks 301 and 302; an OpenFlow controller (OFC) 200 that is connected to the OFSs 101 and 102 via control channels 501 and 502 and that controls the OFSs 101 and 102; and terminals 401 and 402 that are connected to the OFSs 101 and 102, respectively, and that communicate with each other.

The OFSs 101 and 102 are OpenFlow switches having an Ether-OAM function and operate by referring to entries in flow and event tables set by the OFC 200. The Ether-OAM function is an operation, administration, and maintenance function for an Ethernet (registered mark) network defined in ITU-T Y.1731, IEEE 802.1ag, etc.

The OFC 200 exchanges control messages with the OFSs 101 and 102 via the control channels 501 and 502 and adds entries to the flow and event tables (which will be described below) in the OFSs 101 and 102.

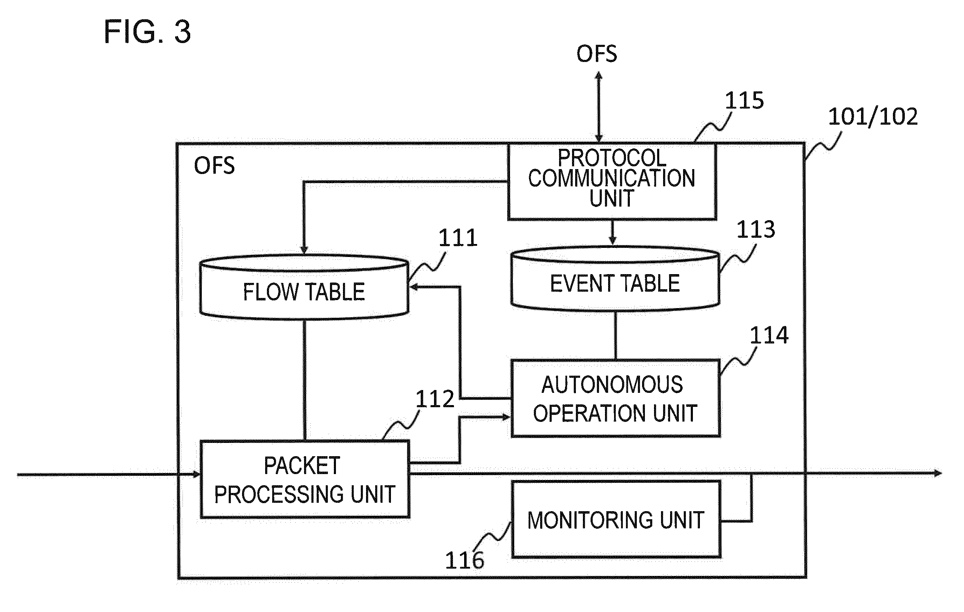

Fig. 3 illustrates a detailed configuration of the OFS 101/102. As illustrated in Fig. 3, the OFS 101/102 includes a flow table 111, a packet processing unit 112, an event table 113, an autonomous operation unit 114, a protocol communication unit 115, and a monitoring unit 116.

The flow table 111 corresponds to the above first table storing an entry(ies) defining match conditions against which received packets are matched and a processing content(s) applied to packets that match the match conditions. A plurality of flow tables 111 may be included as disclosed in NPL 2.

When receiving a packet from the outside, the packet processing unit 112 searches the flow table 111 for an entry having match conditions that match the ingress port or header information of the received packet. As a result of the search, if the packet processing unit 112 finds an entry having match conditions that match the received packet, the packet processing unit 112 applies a processing content(s) defined in the entry to the packet. As a result of the search, if the packet processing unit 112 does not find an entry having match conditions that match the received packet, the packet processing unit 112 performs a predetermined operation such as dropping of the packet or forwarding of the packet to the OFC 200. If the packet processing unit 112 receives an Ether-OAM failure notification, the packet processing unit 112 outputs the Ether-OAM failure notification to the autonomous operation unit 114. An operation of the OFS 101/102 performed when the OFS 101/102 receives an Ether-OAM failure notification can be realized by setting an entry(ies) that instructs outputting to a virtual port connected to the autonomous operation unit 114 in the flow table 111.

The event table 113 corresponds to the above second table storing entries in which various types of event conditions that can be detected by the OFS 101/102 are associated with processing contents (event actions) performed when the corresponding events occur. It is preferable that the OFC 200 set an entry(ies) in the event table 113 by using a path calculation result when creating the entry(ies) in the flow table 111. Of course, a network administrator or the like may manually set an entry(ies) in the event table 113. Since it is likely that the event table 113 is referred to or rewritten less frequently than the flow table 111, the event table 113 does not need to be configured by a CAM or the like, unlike the flow table 111.

If a state (a failure, for example) that matches an event condition written in the event table 113 occurs, the autonomous operation unit 114 performs a processing content(s) (event action(s)) defined in the matching entry. In addition, if an entry(ies) in the flow table 111 is changed by performing the processing content(s) (event action(s)) defined in the entry in the event table 113, the autonomous operation unit 114 notifies the OFC 200 of the processing content(s) performed or the change(s) made to the flow table 111. In this way, the consistency between the flow entry(ies) that the OFC 200 grasps is set in the OFS 101/102 and the flow entry(ies) actually set in the OFS 101/102 can be maintained.

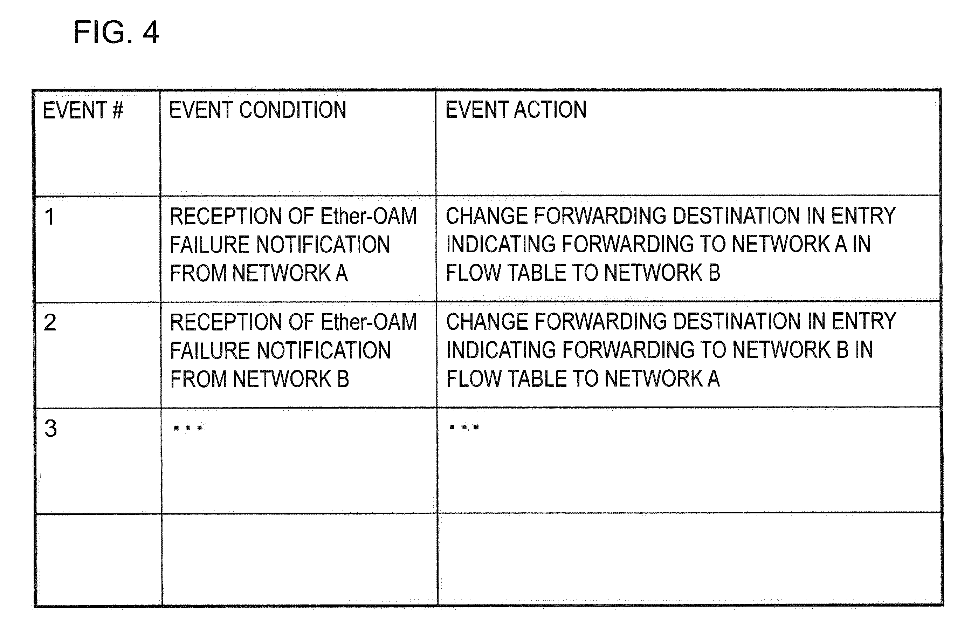

Fig. 4 illustrates an exemplary configuration of the event table held in the OFS 101. In the example in Fig. 4, when receiving an Ether-OAM failure notification from the network A (the network 301 in Fig. 2), the OFS 101 extracts an entry indicating forwarding to the network A from the flow table 111 and changes the forwarding destination written in the entry to the network B (the network 302 in Fig. 2) (see the first entry). Likewise, when receiving an Ether-OAM failure notification from the network B (the network 302 in Fig. 2), the OFS 101 extracts an entry indicating forwarding to the network B from the flow table 111 and changes the forwarding destination written in the entry to the network A (the network 301 in Fig. 2) (see the second entry).

The protocol communication unit 115 is a means for communicating with the OFC 200 by using, for example, the OpenFlow protocol in NPL 2.

The monitoring unit 116 monitors operating statuses and link statuses of the corresponding OFS. If the monitoring unit 116 finds a malfunction, the monitoring unit 116 transmits an Ether-OAM failure notification or an Ether-OAM failure recovery notification to a different OFS(s), etc.

Each unit (processing means) in the OFS 101/102 illustrated in Fig. 3 can be realized by a computer program that causes a computer mounted on the OFS to use its hardware and perform corresponding processing as described above.

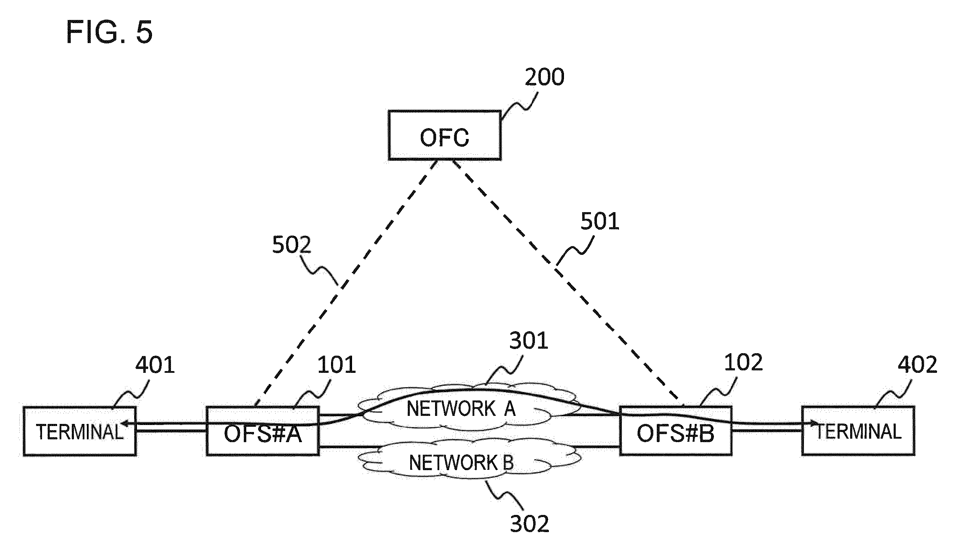

Next, an operation according to the present exemplary embodiment will be described in detail with reference to the drawings. The following description will be made assuming that each of the flow tables 111 in the respective OFSs 101 and 102 includes an entry for forwarding packets transmitted between the terminals 401 and 402 via the network 301, as indicated by a double-headed arrow in Fig. 5.

If a failure occurs in the network 301 in Fig. 5 and if the OFS 101 receives an Ether-OAM failure notification from an OFS or the like in the network 301, the OFS 101 begins to forward the packets transmitted between the terminals 401 and 402 via the network 302 in accordance with an entry that matches the corresponding event condition in the event table 113. More specifically, the OFS 101 refers to the corresponding entry defining the forwarding destination of the packets addressed to the terminal 402 from the terminal 401 in the flow table 111 and changes the forwarding destination from the OFS belonging to the network 301 to an OFS belonging to the network 302, for example. If the ingress port in the match conditions of the entry for processing the packets addressed to the terminal 401 from the terminal 402 represents a port connected to the network 301, as needed, the OFS 101 changes the ingress port in the entry from the port connected to the network 301 to a port connected to the network 302.

The OFS 102 also makes necessary changes so that the packets between the terminals 401 and 402 are forwarded via the network 302.

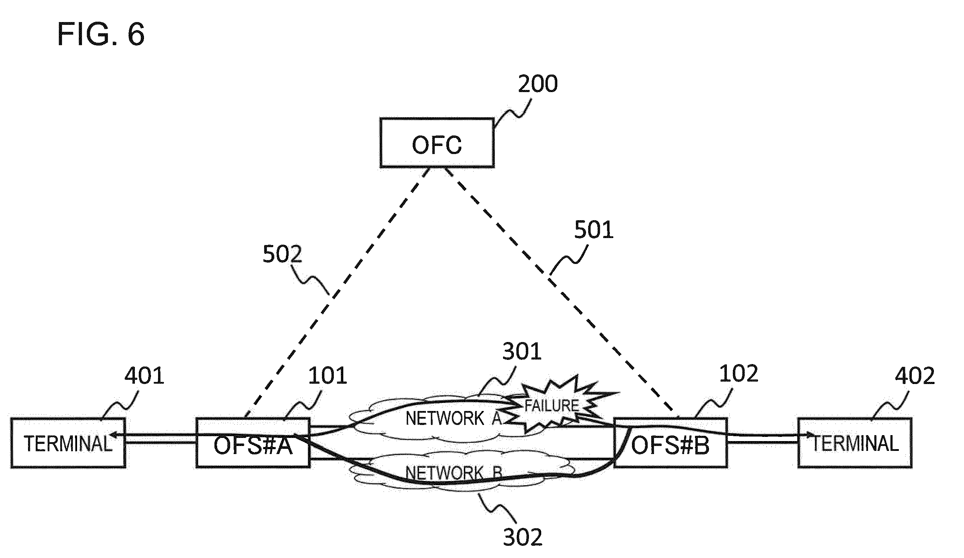

In this way, as illustrated in Fig. 6, the packet forwarding paths between the terminals 401 and 402 can be switched without requiring control by the OFC 200. Thus, even when a failure occurs in the network 301, the communication can promptly be resumed.

In addition, according to the present exemplary embodiment, since the number of control messages exchanged among the OFC and OFSs can be reduced, congestion in the control channels 501 and 502 can be avoided, for example. With the basic configuration in NPL 2, if a failure occurs in a network and if many OFSs are connected to the network, these OFSs transmits a request (Packet-In message) to the OFC 200 for an entry to be registered in their flow tables 111. In response, the OFC 200 creates an entry to be set in each OFS and transmits the entry thereto. According to the present exemplary embodiment, it is only necessary that the autonomous operation unit 114 of an individual OFS notify the OFC 200 of a change(s) made in its flow table 111. Thus, the communication amount is reduced by half at least.

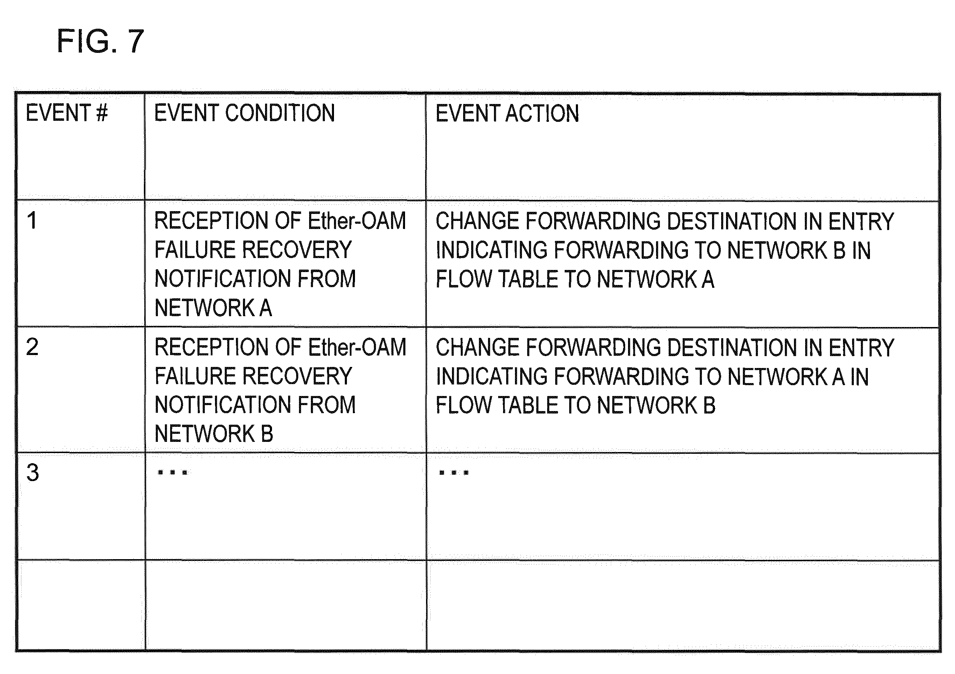

By setting entries in the event table 113, an individual OFS can perform a recovery operation from the state illustrated in Fig. 6 to the state illustrated in Fig. 5 by itself. Fig. 7 illustrates exemplary entries for a recovery operation that are stored in the event table. In the example in Fig. 7, when receiving an Ether-OAM failure recovery notification from the network B (the network 302 in Fig. 2), the OFS 101 extracts an entry indicating forwarding to the network B from the flow table 111 and changes the forwarding destination written in the entry to the network A (the network 301 in Fig. 2) (see the first entry in Fig. 7). Likewise, when receiving an Ether-OAM failure recovery notification from the network A (the network 301 in Fig. 2), the OFS 101 extracts an entry indicating forwarding to the network A from the flow table 111 and changes the forwarding destination written in the entry to the network B (the network 302 in Fig. 2) (see the second entry in Fig. 7).

In this way, the packet forwarding path between the terminals 401 and 402 in Fig. 6 can be changed back to the path illustrated in Fig. 5, without control by the OFC 200. Thus, for example, even when a failure occurs in the network 301 and the network 302 is temporarily used, a recovery operation can promptly be performed.

### [Second exemplary embodiment]

Next, a second exemplary embodiment will be described. In the second exemplary embodiment, the same OFSs as those used in the above first exemplary embodiment are used to realize failover between servers. Since the present exemplary embodiment can be realized by the same configuration as that according to the first exemplary embodiment, the present exemplary embodiment will be described with a focus on the difference.

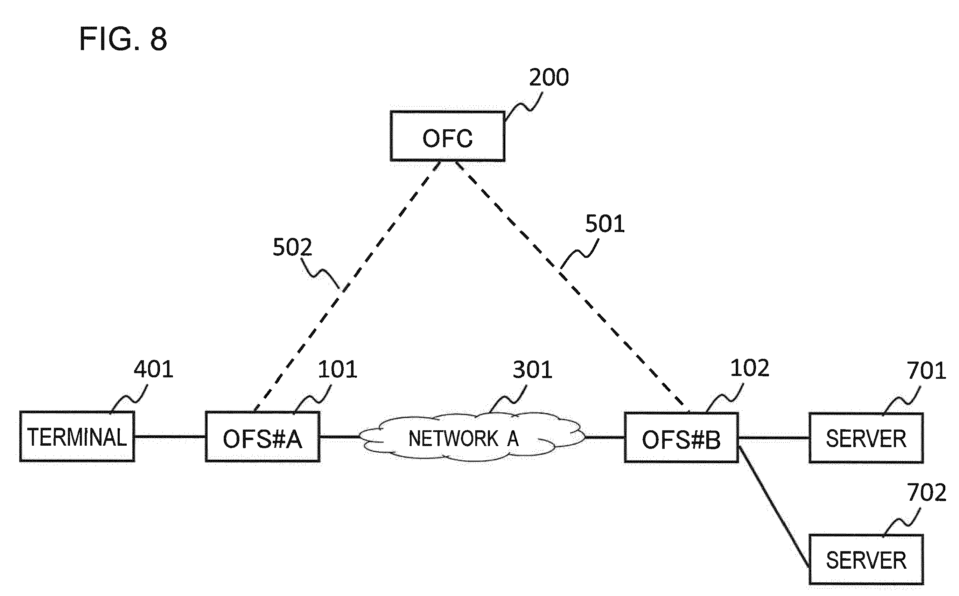

Fig. 8 illustrates a configuration of a communication system according to the second exemplary embodiment of the present invention. As illustrated in Fig. 8, the communication system includes: OpenFlow switches (OFSs) 101 and 102 that are arranged at edges of a network 301; an OpenFlow controller (OFC) 200 that is connected to the OFSs 101 and 102 via control channels 501 and 502 and that controls the OFSs 101 and 102; a terminal 401 that is connected to and that communicates with the OFSs 101 and 102; a server 701 that provides a service(s) in response to a request(s) from the terminal 401; and a server 702 that can continue processing in place of the server 701.

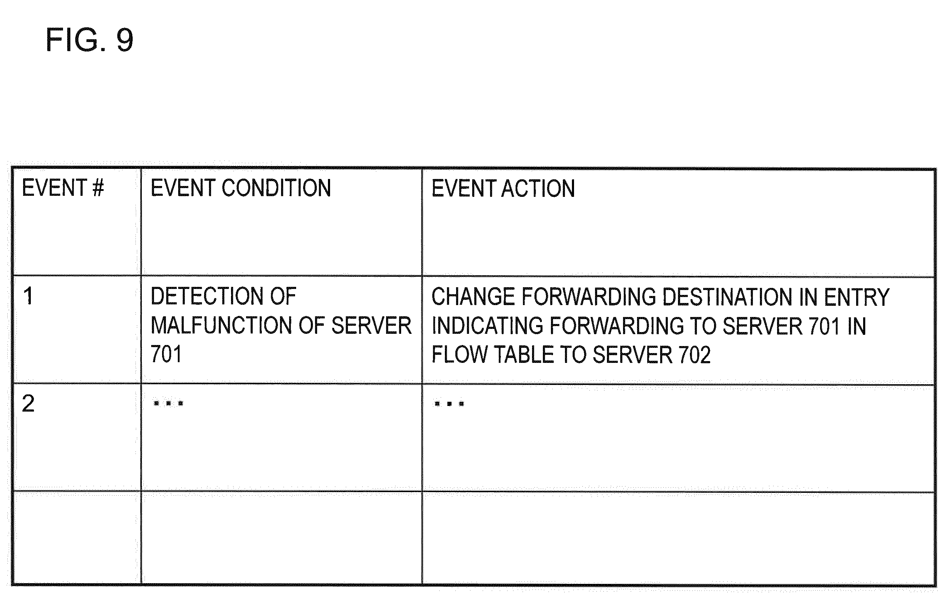

Fig. 9 illustrates an exemplary configuration of an event table held in the OFS 102 in Fig. 8. In the example in Fig. 9, when the monitoring unit 116 detects a malfunction of a server, the OFS 102 extracts an entry indicating that forwarding to the server 701 from the flow table 111 and changes the forwarding destination written in the entry to the server 702 (see the first entry).

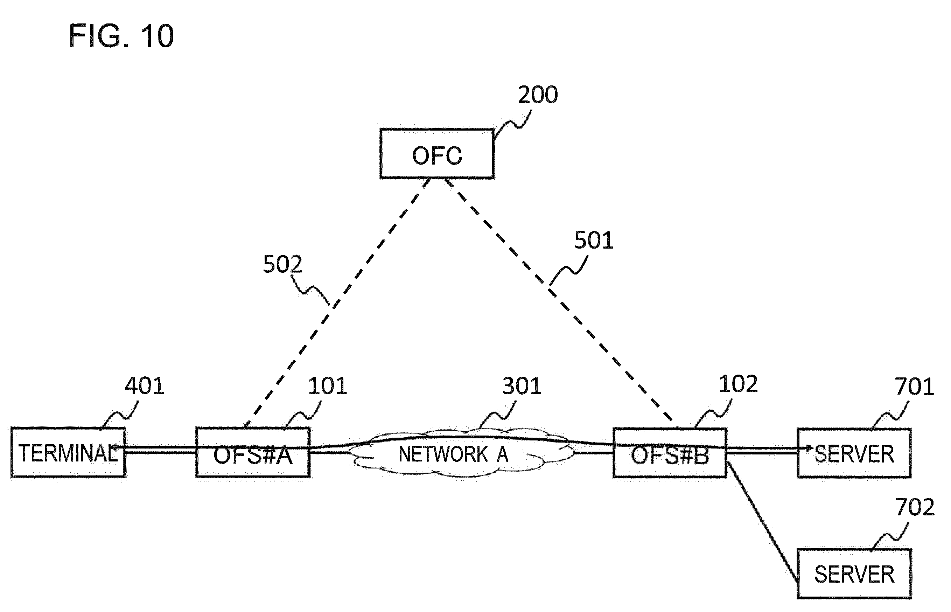

Next, an operation according to the present exemplary embodiment will be described in detail with reference to the drawings. The following description will be made assuming that each of the flow tables 111 in the respective OFSs 101 and 102 includes an entry for forwarding packets transmitted between the terminal 401 and the server 701 via the network 301, as indicated by a double-headed arrow in Fig. 10.

When detecting occurrence of a failure in the server 701 in Fig. 8, the OFS 102 changes entries so that packets addressed to the server 701 from the terminal 401 are transmitted to the server 702 and responses from the server 702 are forwarded to the terminal 401. More specifically, the OFS 102 refers to an entry defining the forwarding destination of the packets addressed to the server 701 from the terminal 401 in the flow table 111 and changes the forwarding destination to a port connected to the server 702. In addition, the OFS 102 adds an entry for processing the response packets addressed to the terminal 401 from the server 702 to the flow table 111.

It is also preferable that the OFS 102 convert an address of the server 701 that is set as the destination or source in a packet header portion into an address of the server 702. In this way, the OFS 101 does not need to change entries in its flow table 111.

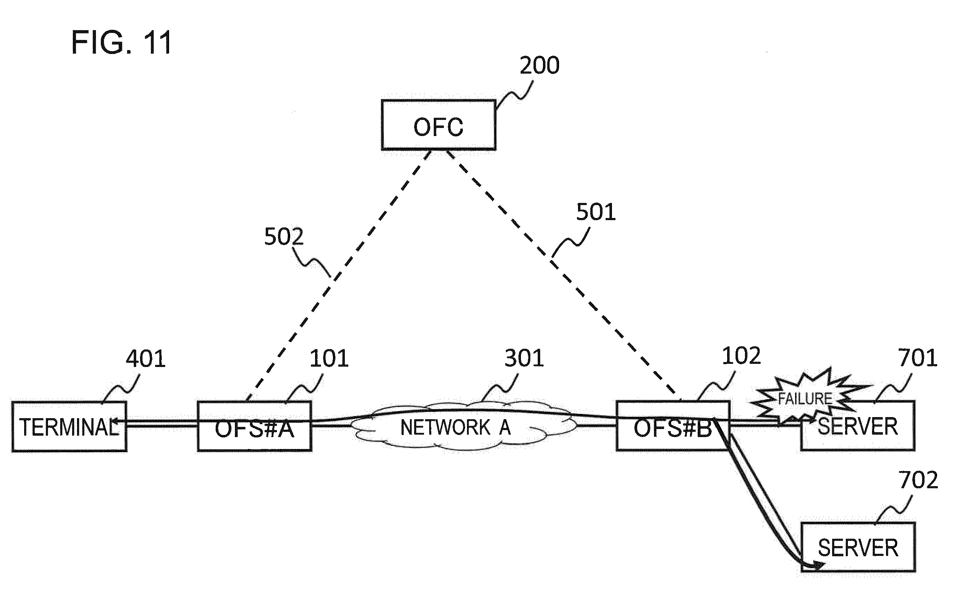

Consequently, the packet forwarding paths between the terminal 401 and the server 701 can be switched without control by the OFC 200, as illustrated in Fig. 11. Thus, even when a failure occurs in the server 701, a service(s) can promptly be provided by the server 702 continuously.

While exemplary embodiments of the present invention have thus been described, the present invention is not limited thereto. Further variations, substitutions, or adjustments can be made without departing from the basic technical concept of the present invention. For example, the configurations of the networks and elements illustrated in the drawings are used only as examples to facilitate understanding of the present invention. Namely, the present invention is not limited to the configurations illustrated in the drawings.

While an OFC and OFSs in NPLs 1 and 2 are used in the above exemplary embodiments, the present invention is also applicable to a centralized-control-type network in which the control plane and the data plane are separated from each other, for example.

In addition, while an individual OFS uses a single event table in the above exemplary embodiments, an individual OFS may adopt another table configuration. For example, as in pipeline processing using a plurality of flow tables in NPL 2, an individual OFS may sequentially refer to a plurality of tables and finally select an entry that matches a plurality of conditions, so as to determine an event action(s). In this way, an individual event table can have a smaller size, and management thereof can be performed more easily.

In addition, while path switching and failover are performed by using the event table 113 in the above exemplary embodiments, other variations are also possible. For example, a certain entry(ies) in a flow table(s) may be removed or a processing content(s) in a certain entry(ies) in a flow table(s) may be rewritten to packet dropping (Drop).

In addition, while an individual OFS has an Ether-OAM function in the above exemplary embodiments, the present invention is also applicable as long as an individual OFS has another equivalent function. For example, like advantageous effects can be expected by setting an entry for changing the packet forward destination in a corresponding flow table 111 in an event table 113 when a malfunction of a link of a port is detected. In addition, another operation is possible. For example, when a failure in a control channel with an OFC or the like is detected, the corresponding OFS may be controlled by a different OFC (the OFS forwards packets to the different OFC and requests the different OFC to transmit flow entries).

Finally, suitable modes of the present invention will be summarized.
[Mode 1] (see the communication node according to the above first aspect)
[Mode 2] The communication node according to mode 1;
   wherein the communication node receives entries to be stored in the first table(s) and the second table(s) from a predetermined control apparatus(es).
[Mode 3] The communication node according to mode 2;
   wherein, when the communication node refers to the second table(s) and rewrites an entry(ies) in the first table(s), the communication node notifies the predetermined control apparatus(es) of the rewritten content(s).
[Mode 4] The communication node according to any one of modes 1 to 3;
   wherein, in the second table(s), there is set an entry(ies) for switching, when a network failure(s) is detected, packet forwarding path(s) that is affected by the failure(s) to a different path(s).
[Mode 5] The communication node according to any one of modes 1 to 3;
   wherein, in the second table(s), there is set an entry(ies) for changing, when a failure(s) of a communication destination(s) is detected, a packet forwarding destination(s) in an entry(ies) in the first table(s) that is affected by the failure(s) to an alternative apparatus(es) of the communication destination(s).
[Mode 6] (see the communication system according to the above second aspect)
[Mode 7] (see the packet processing method according to the above third aspect)
[Mode 8] (see the program according to the above fourth aspect)
   Modes 6 to 8 can be expanded in the same way as mode 1 is expanded to modes 2 to 5.

The disclosure of each of the above PTLs and NPLs is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the disclosure of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### [Reference Signs List]

- 10: communication node
- 11: first table
- 12: packet processing unit
- 13: second table
- 14: autonomous operation unit
- 101, 102: OpenFlow switch (OFS)
- 111: flow table
- 112: packet processing unit
- 113: event table
- 114: autonomous operation unit
- 115: protocol communication unit
- 116: monitoring unit
- 200: OpenFlow controller (OFC)
- 301, 302: network
- 401, 402: terminal
- 501, 502: control channel
- 701, 702: server

## Claims

1. A communication node, comprising:
a packet processing unit which processes received packets by referring to a first table(s) that stores an entry(ies) defining match conditions against which the received packets are matched and a processing content(s) applied to packets that match the match conditions; and
an autonomous operation unit which refers to a second table(s) in which an event(s) is associated with a change(s) applied to an entry(ies) stored in the first table(s) when occurrence of the event(s) is detected and which rewrites an entry(ies) in the first table(s) on the basis of an event(s) that has occurred.

2. The communication node according to claim 1;
wherein the communication node receives entries to be stored in the first table(s) and the second table(s) from a predetermined control apparatus(es).

3. The communication node according to claim 2;
wherein, when the communication node refers to the second table(s) and rewrites an entry(ies) in the first table(s), the communication node notifies the predetermined control apparatus(es) of the rewritten content(s).

4. The communication node according to any one of claims 1 to 3;
wherein, in the second table(s), there is set an entry(ies) for switching, when a network failure(s) is detected, packet forwarding path(s) that is affected by the failure(s) to a different path(s).

5. The communication node according to any one of claims 1 to 3;
wherein, in the second table(s), there is set an entry(ies) for changing, when a failure(s) of a communication destination(s) is detected, a packet forwarding destination(s) in an entry(ies) in the first table(s) that is affected by the failure(s) to an alternative apparatus(es) of the communication destination(s).

6. A communication system, comprising:
at least one communication node including:
a packet processing unit which processes received packets by referring to a first table(s) that stores an entry(ies) defining match conditions against which received packets are matched and a processing content(s) applied to packets that match the match conditions; and
an autonomous operation unit which refers to a second table(s) in which an event(s) is associated with a change(s) applied to an entry(ies) stored in the first table(s) when occurrence of the event(s) is detected and which rewrites an entry(ies) in the first table(s) on the basis of an event(s) that has occurred; and
at least one control apparatus which sets entries in the first table(s) and the second table(s) of the communication node.

7. A packet processing method, comprising steps of:
causing a communication node, including a packet processing unit which processes received packets by referring to a first table(s) that stores an entry(ies) defining match conditions against which received packets are matched and a processing content(s) applied to packets that match the match conditions, to detect occurrence of a predetermined event(s); and
causing the communication node to refer to a second table(s) in which an event(s) is associated with a change(s) applied to an entry(ies) stored in the first table(s) when occurrence of the event(s) is detected and to rewrite an entry(ies) in the first table(s) on the basis of an event(s) that has occurred.

8. A program, causing a computer, including a packet processing unit which processes received packets by referring to a first table(s) that stores an entry(ies) defining match conditions against which received packets are matched and a processing content(s) applied to packets that match the match conditions, to perform processing for:
detecting occurrence of a predetermined event(s); and
referring to a second table(s) in which an event(s) is associated with a change(s) applied to an entry(ies) stored in the first table(s) when occurrence of the event(s) is detected and rewriting an entry(ies) in the first table(s) on the basis of an event(s) that has occurred.
